# EUROPÄISCHE PATENTSCHRIFT

(11) **EP 1 476 395 B1**
(45) Veröffentlichungstag und Bekanntmachung des Hinweises auf die Patenterteilung: **28.07.2010**
(21) Anmeldenummer: 03742497.5
(22) Anmeldetag: 17.01.2003
(51) Int. Cl.: C01B 15/023

(54) **VERFAHREN ZUR HERSTELLUNG VON WASSERSTOFFPEROXID**
METHOD FOR PRODUCING HYDROGEN PEROXIDE
PROCEDE DE PRODUCTION DE PEROXYDE D'HYDROGENE

(30) Priorität: 21.02.2002 DE 10207407
(43) Veröffentlichungstag der Anmeldung: 17.11.2004
(73) Patentinhaber: Evonik Degussa GmbH, 45128 Essen (DE)
(72) Erfinder: MAURER, Bernhard, A-9710 Feistritz/Drau (AT)
(86) Internationale Anmeldenummer: PCT/EP2003/000443
(87) Internationale Veröffentlichungsnummer: WO 2003/070632

(56) Entgegenhaltungen:
- WO-A-86/06710
- GB-A- 769 515
- US-A- 2 369 912
- US-A- 4 485 084

## Beschreibung

Die Erfindung betrifft ein Verfahren zur Herstellung von Wasserstoffperoxid nach dem Anthrachinonverfahren und richtet sich insbesondere auf die Verwendung des Oxidationsabgases als Engergieträger in verschiedenen Prozessstufen des Gesamtverfahrens.

Bekanntlich wird bei dem sogenannten Anthrachinonverfahren zur Herstellung von Wasserstoffperoxid eine Arbeitslösung, welche ein oder mehrere Anthrachinonderivate als Reaktionsträger in einem organischen Lösungsmittel oder Lösungsmittelgemisch gelöst enthält, in Gegenwart eines Suspensionskatalysators oder eines Festbettkatalysators hydriert. In dieser Hydrierstufe wird zumindest ein Teil des Reaktionsträgers in das entsprechende Anthrahydrochinonderivat überführt. Die vom Katalysator befreite hydrierte Arbeitslösung wird in der nachfolgenden Oxidationsstufe mit Sauerstoff oder mit einem sauerstoffhaltigen Gas, meistens Luft, begast, wobei unter Bildung von Wasserstoffperoxid der Reaktionsträger wieder in die Anthrachinonform überführt wird. In der sich anschließende Extraktionsstufe wird das in der oxidierten Arbeitslösung enthaltene Wasserstoffperoxid mit Wasser oder einer verdünnten wässrigen Wasserstoffperoxidlösung extrahiert. Anstelle mittels einer Extraktion lässt sich Wasserstoffperoxid auch mittels einer Desorption aus der oxidierten Arbeitslösung isolieren. Die zurückgewonnene Arbeitslösung wird wieder in die Hydrierstufe rezykliert.

Neben den genannten Prozesstufen umfasst das Anthrachinonverfahren eine Reihe von weiteren Prozessstufen die für einen wirtschaftlichen Betrieb wesentlich sind, darunter: Konzentrierung und Reinigung der erhaltenen wässrigen wasserstoffperoxidlösung; Trocknung der aus der Extraktionsstufe zurückgewonnenen Arbeitslösung vor deren Rezyklierung in die Hydrierstufe; Regenerierung der Arbeitslösung zwecks Umwandlung von unwirksam gewordenen Reaktionsträgerkomponenten in aktive Komponenten und Regenerierung des Hydrierkatalysators zwecks Aktivierung desselben. Eine zusammenfassende Darstellung des Anthrachinonverfahrens, welche in die Offenbarung der vorliegenden Erfindung einbezogen wird, ist Ullmann's Encyclopedia of Industrial Chemistry, 5th Ed., 1989, Vol. A13, Seiten 447 - 457 zu entnehmen.

Die Durchführung der Oxidationsstufe erfolgt in einem oder mehreren hintereinander geschalteten Oxidationsreaktoren, welche im Gleichstrom oder im Gegenstrom betrieben werden; Auch eine Kombination beider Ausführungsformen ist bekannt. Bei der technischen Durchführung der Oxidationsstufe werden insbesondere solche Maßnahmen ergriffen, welche es ermöglichen, die Verweilzeit der Arbeitslösung in der Oxidationsstufe so kurz wie möglich zu halten, um den Grad einer Nebenproduktbildung zu minimieren. Beispielhafte Ausführungsformen zur Durchführung der Oxidationsstufe sind außer dem zuvor genannten Zitat auch der DE-Auslegeschrift 20 03 268 und den US-Patentschriften 3,073,680 und 3,752,885 zu entnehmen.

Gemäß WO 86/06710 lässt sich die Oxidation in kurzer Zeit und mit geringem technischen Aufwand durchführen, indem die hydrierte Arbeitslösung mit einem oxidierenden Gas in einem Gleichstromreaktor bei Temperaturen unter 100 °C und bei Überdrücken unter 15 bar unter Ausbildung eines koaleszenzgehemmten Systems intensiv begast und das koaleszenzgehemmte System nach Durchströmen des oder der Oxidationsreaktoren in eine Flüssigphase und in ein Oxidationsabgas aufgetrennt wird.

Bei dem zuletzt gewürdigten Verfahren sowie anderen Oxidationsverfahren unter Verwendung von Luft wird das Oxidationsabgas, bevor dieses an die Atmosphäre abgegeben werden kann, entspannt und dann in einer Abgasreinigungsvorrichtung von organischen Lösungsmittelbestandteilen befreit. Bei den Abgasreinigungsvorrichtungen handelt es sich insbesondere um Adsorptionsvorrichtungen, wie Adsorptionstürme, welche mit einem geeigneten Adsorptionsmittel, wie Aktivkohle oder einem natürlichen oder synthetischen oxidischen oder silikatischen Adsorbens, darunter Zeolithe, befüllt sind. Bevorzugtes Adsorptionsmittel ist Aktivkohle. Alternativ hierzu lässt sich das Oxidationsabgas mittels eines Flüssigabsorbers (Gaswäscher) oder durch Ausfrieren von organischen Bestandteilen reinigen.

Da die Oxidationsreaktoren mit unter Überdruck stehender Luft betrieben werden, verlässt das Oxidationsabgas auch bei hohem Umsatz des Sauerstoffs der Luft die Oxidationsreaktoren noch mit erhöhtem Druck. Bevor das Oxidationsabgas zwecks Abreicherung der darin enthaltenen organischen Bestandteile in die Abgasreinigungsstufe geleitet wird, muss das üblicherweise in einer Kondensationsstufe zuvor von gelösten Bestandteilen befreite Abgas vollständig oder weitgehend entspannt werden. Bei Verwendung von Aktivkohletürmen zwecks Abgasreinigung werden diese zyklisch regeneriert, indem das adsorbierte Lösungsmittel mit Mitteldruckdampf desorbiert wird.

Wie aus der DE 40 29 784 oder dem zuvor zitierten Ullmann-Zitat (Seite 453 - 454) bekannt ist, lässt sich die Oxidationsstufe zwar unter Einsatz von reinem Sauerstoff anstelle von Luft abgasfrei durchführen, jedoch ist diese Ausführungsform gegenüber der Verwendung von Luft weniger wirtschaftlich. Die Erfindung richtet sich demnach nicht auf Verfahren mit einer abgasfreien Oxidationsstufe.

Nachteilig an dem bekannten Verfahren zur Durchführung der Oxidationsstufe unter Verwendung von Luft mit nachfolgender Entspannung des Oxidationsabgases und Reinigung desselben ist, dass bei der Entspannung eine beträchtliche Menge Energie vernichtet wird.

US 4,485,084 beschreibt ein Verfahren zur Herstellung von Wasserstoffperoxid nach dem Anthrachinonverfahren, bei dem das unter Druck stehende Oxidationsabgas einer isentropischen Entspannung zur Kondensation von darin enthaltenem Lösungsmittel unterzogen wird. Durch isentropische Entspannung in einem Turboexpander kann dabei ein Teil der Druckenergie als mechanische Energie gewonnen werden.

Die Aufgabe der vorliegenden Erfindung besteht darin, einen Weg aufzuzeigen, wie die im Oxidationsabgas enthaltene Energie im Rahmen des gesamten Verfahrens zur Herstellung von Wasserstoffperoxid genutzt und der Einsatz von Fremdenergie zur Erzeugung des an verschiedenen Stellen im Anthrachinonverfahren benötigten Vakuums reduziert werden kann.

Die Lösung dieser Aufgabe besteht darin, dass das unter Druck stehende Oxidationsabgas als Treibgas für einen oder mehrere Gasstrahler verwendet wird und hiermit das an verschiedenen Stellen des Gesamtprozesses anfallende Beatmungsgas abgesaugt und/oder Vakuum für diverse Hilfsprozesse erzeugt wird.

Ein Einsatzgebiet für die Durchführung des erfinderischen Gedankens ist die Vakuumerzeugung in einer Destillationseinheit zur Aufkonzentrierung des wässrigen Wasserstoffperoxids. Zur Vakuumerzeugung wurden bisher Wasserringpumpen oder mit anderen Treibmedien, wie Dampf und Kühlwasser, betriebene Strahler verwendet.

Ein weiteres Einsatzgebiet zur Anwendung der erfindungsgemäßen Lösung besteht darin, das Vakuum für Vakuumtrockner, womit die Arbeitslösung vor der Rezyklierung in die Hydrierstufe getrocknet wird, zu erzeugen. Auch hier wurden bisher zur Vakuumerzeugung bekannte Vakuumaggregate, wie Wasserringpumpen und mit anderen Medien, wie Dampf, betriebene Strahler verwendet.

Ein weiteres Einsatzgebiet für den erfindungsgemäß zu betreibende Gasstrahler besteht darin, Lösungsmittelemissionen in die Umwelt zu vermeiden, indem an verschiedenen potenziellen Emissionsstellen innerhalb der Produktionsanlage, darunter Beatmungsstutzen von Lösungsmittellagertanks und Arbeitslösungslagertanks Brüden abgesaugt und einer Abgasreinigungsanlage zugeführt werden.

Gegenstand der Erfindung ist demgemäß ein Verfahren zur Herstellung von Wasserstoffperoxid nach dem Anthrachinonverfahren in einer kontinuierlich betriebenen Produktionsanlage, umfassend
(i) eine Hydrierstufe, wobei eine ein oder mehrere Anthrachinonderivate enthaltende organische Arbeitslösung in Gegenwart eines heterogenen Katalysators hydriert wird,
(ii)eine Oxidationsstufe, wobei hydrierte Arbeitslösung unter Bildung von Wasserstoffperoxid oxidiert wird, indem ein sauerstoffhaltiges Oxidationsgas, insbesondere Luft, mit einem Überdruck Pᵢ von mindestens 1 bar in einem Oxidationsreaktor eingeführt und mit der Arbeitslösung aus der Stufe (i) kontaktiert wird, Oxidationsabgas aus dem Oxidationsreaktor abgeführt und bei Bedarf in einer Abgasreinigungsanlage gereinigt wird, und
iii) eine Stufe zur Isolierung des Wasserstoffperoxids aus der oxidierten Arbeitslösung, insbesondere eine Extraktionsstufe, das dadurch gekennzeichnet ist, dass man das Oxidationsabgas, dessen Überdruck Pₐ kleiner als Pᵢ aber größer als Atmosphärendruck P₀ ist, als Treibgasstrom einem oder mehreren Gasstrahlern zuführt und damit Vakuum für im Anthrachinonverfahren erforderliche Hilfsprozesse erzeugt, insbesondere Vakuum für die Trocknung der extrahierten Arbeitslösung vor der Rückführung derselben in die Hydrierstufe und/oder für die Destillation wässriger Wasserstoffperoxidlösung und/oder zum Ansaugen von Beatmungsgasen an Emissionsstellen von Lösungsmitteldämpfen innerhalb der Produktionsanlage einschließlich Lösungsmittellagertanks.

Die Unteransprüche richten sich auf bevorzugte Ausführungsformen des erfindungsgemäßen Verfahrens, darunter die Verwendung der mit Oxidationsäbgas betriebenen Gasstrahler zur Herstellung des Vakuums für Destillationskolonnen zwecks Konzentrierung der wässrigen Wasserstoffperoxidlösung, zur Trocknung der aus der Extraktionsstufe kommenden Arbeitslösung sowie zum Absaugen von lösungmittelhaltigen Gasen aus verschiedenen Emissionsstellen der Produktionsanlage. In Abhängigkeit von der konkreten Ausführungsform der Oxidationsstufe und damit des Mengenanfalls an Oxidationsabgas wird letzteres zur Erzeugung des Vakuums für eine, zwei oder drei der genannten Nutzungmöglichkeiten verwendet.

Im Stand der Technik wurden in einer Produktionsanlage zur Herstellung von Wasserstoffperoxid zur Vakuumerzeugung elektrisch betriebene Vakuumpumpen oder mittels Mittel- oder Hochdruckdampf betriebene Dampfstrahler verwendet. Während elektrisch betriebene Vakuumpumpen wartungsintensiv sind und zusätzlich elektrische Energie benötigen, sind die Dampfstrahler zwar wartungsarm, führen aber zu einem Dampf- und Kühlwasserverbrauch und erfordern zusätzlich aufwendige periphere Aggregate zur Kondensataufbereitung. Im erfindungsgemäßen Verfahren wird demgegenüber zwecks Vakuumerzeugung und Absaugen von gegebenenfalls lösungsmittelhaltigen Gasen Oxidationsabgas, also das in großer Menge vorhandene Reaktionsrestgas aus der Oxidationsstufe als Treibgas für einen oder mehrere Gasstrahler verwendet. Zur Erzeugung des erforderlichen Vakuums für einen Trockner ; für die Absaugung organischer Dämpfe und/oder für eine oder mehrere Destillationskolonnen ist keine oder nur eine entsprechend reduzierte Menge an Fremdenergie erforderlich. Zudem kann das Gemisch aus dem Sauggas und dem Treibgas umweltschonend in der ohnehin vorhandenen Abgasreinigungsanlage von organischen Bestandteilen befreit werden.

Das in der Oxidationsstufe eingesetzte Oxidationsgas wird mit einem Überdruck Pᵢ von mindestens 1 bar, vorzugsweise 2 bis 15 bar und besonders bevorzugt 2,5 bis 5 bar in den Oxidationsreaktor eingeführt. Das den Oxidationsreaktor verlassende Oxidationsabgas weist einen dem Ausnutzungsgrad des im Oxidationsgas enthaltenen Sauerstoffs und dem gesamten Druckverlust innerhalb des Oxidationsreaktors entsprechend reduzierten Überdruck Pₐ auf. Der Überdruck Pₐ des Oxidationsabgases ist demgemäß kleiner als der Überdrück Pᵢ und liegt im allgemeinen im Bereich von 1 bis 10 bar, vorzugsweise 1 bis 5 bar und besonders bevorzugt 1,5 bis 4 bar. In Abhängigkeit von der Menge Oxidationsabgas und dessen Überdruck Pₐ lassen sich ein oder mehrere Gasstrahler betreiben und das Vakuum für eine oder mehrere der zuvor genannten Nutzungsmöglichkeiten erzeugen.

Im erfindungsgemäßen Verfahren lassen sich handelsübliche Gasstrahler, welche auch als Strahlpumpen, Injektoren oder Gasstrahlverdichter bezeichnet werden, verwenden. Die Bauart derartiger Gasstrahler ist der Fachwelt bekannt: Der Treibstrahl wird durch eine Düse in einer größere Mischstrecke entspannt, gleichzeitig wird aus einem Saugstutzen Sauggas angesaugt und das Gemisch aus Sauggas und Treibgas zu einem Druckstutzen gefördert - siehe Ullmann's Enzyklopedie der technischen Chemie, 4. Auflage (1973), Band 3, Seite 172 sowie Firmenschriften von Herstellern von Gasstrahlpumpen, wie beispielsweise Körting Hannover AG.

Die Trocknung der die Extraktion verlassenden feuchten Arbeitslösung, deren Temperatur im allgemeinen im Bereich von 30 bis 75 °C, insbesondere 40 bis 60 °C liegt, kann in einfachen Trocknungsapparaten durchgeführt werden: Geeignet sind beispielsweise Vakuumbehälter mit, oder ohne Einbauten, vorzugsweise jedoch ein mit einem Spritzfänger ausgestatteter Behälter oder eine kurze Kolonne. Im Trockner wird unter Verwendung eines mit Oxidationsabgas betriebenen Gasstrahlers ein Vakuum im Bereich von 10 bis 300 mbar (absolut), insbesondere 20 bis 100 mbar (absolut) erzeugt. Das Gemisch aus dem Treibgas und den angesaugten Brüden wird einer Abgasreinigungsvorrichtung zugeführt, insbesondere einer Adsorptionsvorrichtung, umfassend mehrere Aktivkohletürme.

In analoger Weise wird das Destillationsvakuum für eine oder mehrere Destillationskolonnen für die Konzentrierung wässriger wasserstoffperoxidlösung erzeugt. Das Destillationsvakuum liegt im allgemeinen im Bereich von 20 bis 200 mbar insbesondere bei 50 bis 150 mbar (jeweils absolut). Das Gemisch aus Treibgas und zuvor vorzugsweise zumindest teilweise kondensierten Brüden wird der Abgasreinigungsvorrichtung zugeführt, um dort die aus dem Treibstrahl stammenden organischen Bestandteile zurückzuhalten und nach Desorption in den Prozess zurückzuführen.

Zur Vermeidung von Lösungmittelemissionen aus mit organischen Lösungsmitteln oder Arbeitslösung befüllten Lagertanks werden die Beatmungsgase mittels eines erfindungsgemäß zu betreibenden Gasstrahlers zuverlässig abgesaugt und das Gasgemisch in einer Abgasreinigungsvorrichtung von organischen Bestandteilen befreit. Der Saugdruck zum Absaugen von Beatmungsgasen an Entlüftungsstutzen liegt unterhalb Atmosphärendruck, insbesondere im Bereich von 400 bis 900 mbar (absolut).

Das erfindungsgemäße Verfahren lässt sich unter Verwendung von im Stand der Technik bekannten Arbeitslösungen durchführen. Diese enthalten bevorzugt Lösuhgsmittelgemische aus einem ersten Lösungsmittel, das insbesondere Anthrachinone löst, und einem zweiten Lösungsmittel, das insbesondere die Anthrahydrochinone löst. Bei den als Reaktionsträger wirkenden Anthrachinonderivaten handelt es sich meistens um 2-Alkylanthrachinone und/oder ihre kernhydrierten 2-Alkylbeta-tetra-hydroanthrachinone, wobei die Alkylgruppe linear oder/und-verzweigt ist und 2 bis 6 C-Atome enthält. Es hat sich fewrner als vorteilhaft erwiesen, zwei verschiedene 2-Alkylanthrachinone und deren Tetrahydroderivate als Reaktionsträger zu verwenden. Beispielhaft wird auf das US-Patent 6,153,169 verwiesen.

Die wesentlichen Vorteile des erfindungsgemäßen Verfahrens liegen darin, dass es möglich geworden ist, die im Oxidationsabgas steckende Druckenergie vor dessen Reinigung im Produktionsprozess zu nutzen, indem Gasstrahler betrieben werden und hiermit an verschiedenen Stellen des Gesamtprozesses benötigtes Vakuum erzeugt wird. Damit wird der Einsatz an Fremdenergie gemindert. Durch das erfindungsgemäße Verfahren lässt sich Wasserstoffperoxid in wirtschaftlicherer Weise gewinnen als dies bisher möglich war.

Die Erfindung wird anhand der nachfolgenden Beispiele weiter verdeutlicht.

### Beispiel 1: Trocknung der Arbeitslösung

Als Trockner diente ein einfacher Vakuumbehälter mit einem Tropfenfänger. Die aus der Extraktionsstufe kommende feuchte Arbeitslösung wird im oberen Teil des Apparates eingeführt und bei einem Trocknervakuum von 50 mbar (Absolutdruck) getrocknet und am unteren Ende des Apparates abgezogen. Aus dem Trockner wurden 49 kg/h Brüden, bestehend aus Restgasen, Wasser und Lösungsmittelkomponenten mittels eines handelsüblichen Gasstrahler und unter Verwendung von Oxidationsabgas als Treibgas angesaugt. Zur Verdichtung der Brüden auf 1050 mbar (absolut) wurde ein Treibgasstrom von 7950 kg/h mit einem absoluten Treibgasdruck von 2,1 bar verwendet. Der für diese Prozessstufe erforderliche Treibgasstrom war kleiner als die Gesamtmenge des Oxidationsabgasstromes, so dass keine Fremdenergie zur Verdichtung des gewünschten Saugstromes erforderlich war.

### Beispiel 2: Destillation wässriger Wasserstoffperoxidlösung

Ausgelegt wurde ein handelsüblicher Gasstrahler zum Erzeugen eines Destillationsvakuums von 97 mbar (absolut). Aus der Destillationskolonne zur Konzentrierung von Wasserstoffperoxid wurden 416 kg/h Brüden, bestehend aus Restgasen, Wasser und Produktkomponenten, angesaugt. Um diese Brüden auf 1050 mbar(absolut) zu verdichten, wurde als Treibstrom Oxidationsabgas in einer Menge von 8915 kg/h mit einem absoluten Treibgasdruck von 5 bar eingesetzt. Dieser Treibgasstrom war kleiner als der zur Verfügung stehende Abgasstrom, so dass auch in diesem Fall zur Vakuumerzeugung keine zusätzliche Energie eingesetzt werden musste.

### Beispiel 3: Absaugen von Lösungsmittel über Lösungsmitteltanks

Zur Vermeidung von Lösungsmittelemissionen wurde ein handelsüblicher Gasstrahler zum Absaugen von Beatmungsgasen aus Entlüftungsstutzen von Lösungsmittellagertanks in der Wasserstoffperoxidanlage mit einem Saugdruck von 750 mbar (absolut) installiert. Aus den saugseitig angeschlossenen Apparaten waren 400 kg/h Brüden, bestehend aus Restgasen und Lösungsmittelkomponenten, anzusaugen. Um diese Brüden auf 1200 mbar (absolut) zu verdichten, wurde der Gasstrahler mit Oxidationsabgas als Treibgas betrieben, und zwar mit einer Menge von 1390 kg/h bei einem absoluten Treibgasdruck von 2,2 bar.

## Patentansprüche

1. Verfahren zur Herstellung von Wasserstoffperoxid nach dem Anthrachinonverfahren in einer kontinuierlich betriebenen Produktionsanlage, umfassend
(i) eine Hydrierstufe, wobei eine ein oder mehrere Anthrachinonderivate enthaltende organische Arbeitslösung in Gegenwart eines heterogenen Katalysators hydriert wird,
(ii)eine Oxidationsstufe, wobei hydrierte Arbeitslösung unter Bildung von Wasserstoffperoxid oxidiert wird, indem ein sauerstoffhaltiges Oxidationsgas, insbesondere Luft, mit einem Überdruck Pᵢ von mindestens 1 bar in einen Oxidationsreaktor eingeführt und mit der Arbeitslösung aus der Stufe (i) kontaktiert wird, Oxidationsabgas, aus dem Oxidationsreaktor abgeführt und bei Bedarf in einer Abgasreinigungsanlage gereinigt wird, und
iii) eine Stufe zur Isolierung des Wasserstoffperoxids aus der oxidierten Arbeitslösung, insbesondere eine Extraktionsstufe,
**dadurch gekennzeichnet,**
**dass** man das Oxidationsabgas, dessen Überdruck Pₐ kleiner als Pᵢ aber größer als Atmosphärendruck P₀ ist, als Treibgasstrom einem oder mehreren Gasstrahlern zuführt und damit Vakuum für im Anthrachinonverfahren erforderliche Hilfsprozesse erzeugt, insbesondere Vakuum für die Trocknung der extrahierten Arbeitslösung vor der Rückführung derselben in die Hydrierstufe und/oder für die Destillation wässriger Wasserstoffperoxidlösung und/oder zum Ansaugen von Beatmungsgasen an Emissionsstellen von Lösungsmitteldämpfen innerhalb der Produktionsanlage einschließlich Lösungsmittellagertanks.

2. Verfahren nach Anspruch 1,
**dadurch gekennzeichnet,**
**dass** man als Oxidationsgas Luft oder an Sauerstoff angereicherte Luft verwendet und dieses Gas mit einem Überdruck Pᵢ im Bereich von 2 bis 15 bar in den Oxidationreaktor einleitet.

3. Verfahren nach Anspruch 1 oder 2,
**dadurch gekennzeichnet,**
**dass** man das mit einem Überdruck Pₐ im Bereich von 1 bis 10 bar aus dem Oxidationsreaktor austretende Oxidationsabgas als Treibstrahl einem Gasstrahler zuführt.

4. Verfahren nach einem der Ansprüche 1 bis 3,
**dadurch gekennzeichnet,**
**dass** man in einem Trockner zur Trocknung der extrahierten Arbeitslösung mittels eines mit Oxidationsabgas betriebenen Gasstrahlers ein Trocknervakuum im Bereich von 10 bis 300 mbar (absolut), insbesondere 20 bis 100 mbar (absolut), erzeugt und das Gemisch aus Treibgas und angesaugten Brüden einer Abgasreinigungsvorrichtung zuführt.

5. Verfahren nach einem der Ansprüche 1 bis 3,
**dadurch gekennzeichnet,**
**dass** man am Kopf einer Destillationsvorrichtung zur Konzentrierung wässriger wasserstoffperoxidlösung mittels eines mit Oxidationsabgas betriebenen Gasstrahlers ein Destillationsvakuum im Bereich von 20 bis 200 mbar (absolut)erzeugt und das Gemisch aus Treibgas und zuvor zumindest teilweise kondensierten Brüden einer Abgasreinigungsvorrichtung zuführt.

6. Verfahren nach einem der Ansprüche 1 bis 3,
**dadurch gekennzeichnet,**
**dass** man zur Vermeidung von Lösungsmittelemissionen aus organische Lösungsmittel oder Arbeitslösung enthaltenden Lagertanks Beatmungsgase mittels eines mit Oxidationsabgas betriebenen Gasstrahlers mit einem Saugdruck im Bereich von unterhalb Atmosphärendruck bis 400 mbar (absolut) absaugt und das Gemisch aus Treibgas und angesaugten Gasen einer Abgasreinigungsvorrichtung zuführt.

7. Verfahren nach einem der Ansprüche 1 bis 6,
**dadurch gekennzeichnet,**
**dass** man das Gemisch aus Treibgas und abgesaugten Gasen in einer Adsorptibnsanlage durch eine Schüttung eines Adsorptionsmittels, insbesondere Aktivkohle oder ein Zeolith, leitet und dabei von organischen Bestandteilen befreit.

8. Verfahren nach einem der Ansprüche 1 bis 7,
**dadurch gekennzeichnet,**
**dass** man das Oxidationsabgas zum Betreiben eines ersten Gasstrahlers zum Zwecke der Absaugung von Lösungsmitteldämpfen aus Lagertanks und eines zweiten und/oder dritten Gasstrahlers zum Erzeugen des Vakuums für die Trocknung der Arbeitslösung und/oder einer Destillationskolonne verwendet.

## Claims

1. Process for production of hydrogen peroxide by the anthraquinone process in a continuously operated production plant comprising
(i) a hydrogenation stage wherein an organic working solution containing one or more anthraquinone derivatives is hydrogenated in the presence of a heterogeneous catalyst,
(ii) an oxidation stage wherein hydrogenated working solution is oxidized with the formation of hydrogen peroxide by an oxygen-containing oxidizing gas, more particularly air, at an overpressure Pᵢ of at least 1 bar being introduced into an oxidation reactor and contacted with the working solution from stage (i), and oxidation offgas is withdrawn from the oxidation reactor and, if desired, purified in an offgas purification plant, and
(iii) a stage for isolating hydrogen peroxide from the oxidized working solution, more particularly an extraction stage,
**characterized in that** the oxidation offgas, the overpressure Pₐ of which is less than Pᵢ but greater than atmospheric pressure P₀, is fed as motive gas stream to one or more gas-jet ejectors and thereby produces vacuum for auxiliary operations required in the anthraquinone process, more particularly vacuum for drying the extracted working solution prior to returning same into the hydrogenation stage and/or for distilling aqueous hydrogen peroxide solution and/or for aspirating vent gases at emission points of solvent vapours within the production plant including solvent storage tanks.

2. Process according to Claim 1, **characterized in that** air or oxygen-enriched air is used as oxidizing gas and introduced into the oxidation reactor at an overpressure Pᵢ in the range from 2 to 15 bar.

3. Process according to Claim 1 or 2, **characterized in that** the oxidation offgas emerging from the oxidation reactor at an overpressure Pₐ in the range from 1 to 10 bar is fed as motive jet to a gas-jet ejector.

4. Process according to any one of Claims 1 to 3, **characterized in that** a dryer vacuum in the range from 10 to 300 mbar (absolute), more particularly 20 to 100 mbar (absolute), is produced by means of a gas-jet ejector operated with oxidation offgas in a dryer for drying the extracted working solution and the mixture of motive gas and aspirated vapours is fed to an offgas purification apparatus.

5. Process according to any one of Claims 1 to 3, **characterized in that** a distillation vacuum in the range from 20 to 200 mbar (absolute) is produced by means of a gas-jet ejector operated with oxidation offgas at the head of a distillation apparatus for concentrating aqueous hydrogen peroxide solution and the mixture of motive gas and previously at least partly condensed vapours is fed to an offgas purification apparatus.

6. Process according to any one of Claims 1 to 3, **characterized in that** to avoid solvent emissions from storage tanks containing organic solvents or working solution, vent gases are aspirated by means of a gas-jet ejector operated with oxidation offgas at a suction pressure in the range from below atmospheric pressure to 400 mbar (absolute) and the mixture of motive gas and aspirated gases is fed to an offgas purification apparatus.

7. Process according to any one of Claims 1 to 6, **characterized in that** the mixture of motive gas and aspirated gases is passed in an adsorption plant through a bed of an adsorbent, more particularly activated carbon or a zeolite, and freed of organic constituents in the process.

8. Process according to any one of Claims 1 to 7, **characterized in that** the oxidation offgas is used for operating a first gas-jet ejector for the purpose of aspirating solvent vapours from storage tanks and a second and/or third gas-jet ejector for producing the vacuum for drying the working solution and/or a distillation column.

## Revendications

1. Procédé de fabrication de peroxyde d'hydrogène par le procédé à l'anthraquinone dans une installation de production exploitée en continu, comprenant
(i) une étape d'hydrogénation, lors de laquelle une solution de travail organique contenant un ou plusieurs dérivés d'anthraquinone est hydrogénée en présence d'un catalyseur hétérogène,
(ii) une étape d'oxydation, lors de laquelle une solution de travail hydrogénée est oxydée pour former du peroxyde d'hydrogène, en introduisant un gaz d'oxydation contenant de l'oxygène, notamment de l'air, dans un réacteur d'oxydation avec une surpression Pᵢ d'au moins 1 bar et en le mettant en contact avec la solution de travail issue de l'étape (i), un gaz d'échappement de l'oxydation étant évacué du réacteur d'oxydation et au besoin purifié dans une installation de purification du gaz d'échappement, et
(iii) une étape d'isolement du peroxyde d'hydrogène à partir de la solution de travail oxydée, notamment une étape d'extraction,
**caractérisé en ce que**
le gaz d'échappement de l'oxydation, dont la surpresssion Pₐ est inférieure à Pᵢ mais supérieure à la pression atmosphérique P₀, est introduit en tant que courant gazeux d'entraînement dans un ou plusieurs éjecteurs à gaz, et un vide est ainsi généré pour des sous-procédés nécessaires au procédé à l'anthraquinone, notamment un vide pour le séchage de la solution de travail extraite avant son recyclage dans l'étape d'hydrogénation et/ou pour la distillation d'une solution aqueuse de peroxyde d'hydrogène et/ou pour l'aspiration de gaz de ventilation aux emplacements d'émission de vapeurs de solvant dans l'installation de production, y compris la cuve de stockage de solvant.

2. Procédé selon la revendication 1, **caractérisé en ce que** de l'air ou de l'air enrichi en oxygène est utilisé en tant que gaz d'oxydation et ce gaz est introduit dans le réacteur d'oxydation avec une surpression Pᵢ dans la plage allant de 2 à 15 bar.

3. Procédé selon la revendication 1 ou 2, **caractérisé en ce que** le gaz d'échappement de l'oxydation qui sort du réacteur d'oxydation avec une surpression Pₐ dans la plage allant de 1 à 10 bar est introduit en tant que jet d'entraînement dans un éjecteur à gaz.

4. Procédé selon l'une quelconque des revendications 1 à 3, **caractérisé en ce qu'**un vide de séchage dans la plage allant de 10 à 300 mbar (absolu), notamment de 20 à 100 mbar (absolu) est généré dans un séchoir pour le séchage de la solution de travail extraite au moyen d'un éjecteur à gaz exploité avec le gaz d'échappement de l'oxydation, et le mélange de gaz d'entraînement et de vapeurs aspirées est introduit dans un dispositif de purification du gaz d'échappement.

5. Procédé selon l'une quelconque des revendications 1 à 3, **caractérisé en ce qu'**un vide de distillation dans la plage allant de 20 à 200 mbar (absolu) est généré à la tête d'un dispositif de distillation pour la concentration d'une solution aqueuse de peroxyde d'hydrogène au moyen d'un éjecteur à gaz exploité avec le gaz d'échappement de l'oxydation, et le mélange de gaz d'entraînement et de vapeurs auparavant au moins partiellement condensées est introduit dans un dispositif de purification du gaz d'échappement.

6. Procédé selon l'une quelconque des revendications 1 à 3, **caractérisé en ce que** pour éviter des émissions de solvant issues d'une cuve de stockage contenant un solvant organique ou la solution de travail, des gaz de ventilation sont aspirés au moyen d'un éjecteur à gaz exploité avec le gaz d'échappement de l'oxydation avec une pression d'aspiration dans la plage allant d'une pression inférieure à la pression atmosphérique à 400 mbar (absolu), et le mélange de gaz d'entraînement et de gaz aspirés est introduit dans un dispositif de purification du gaz d'échappement.

7. Procédé selon l'une quelconque des revendications 1 à 6, **caractérisé en ce que** le mélange de gaz d'entraînement et de gaz aspirés est conduit dans une installation d'adsorption au travers d'un garnissage d'un agent d'adsorption, notamment de charbon actif ou d'une zéolithe, et y est débarrassé des constituants organiques.

8. Procédé selon l'une quelconque des revendications 1 à 7, **caractérisé en ce que** le gaz d'échappement de l'oxydation est utilisé pour l'exploitation d'un premier éjecteur à gaz pour l'aspiration de vapeurs de solvant issues d'une cuve de stockage et d'un deuxième et/ou troisième éjecteur à gaz pour la génération du vide pour le séchage de la solution de travail et/ou d'une colonne de distillation.
